(19) Europäisches Patentamt / European Patent Office / Office européen des brevets

(11) **EP 3 722 747 B1**

(12) **EUROPEAN PATENT SPECIFICATION**

(45) Date of publication and mention
of the grant of the patent:
**31.07.2024 Bulletin 2024/31**

(21) Application number: **20162528.2**

(22) Date of filing: **11.03.2020**

(51) International Patent Classification (IPC):
**G01B 15/00** *(2006.01)*     **G01B 11/24** *(2006.01)*
**G01B 15/02** *(2006.01)*

(52) Cooperative Patent Classification (CPC):
**G01B 15/00;** G01B 11/24; G01B 15/025

(54) **VOLUME MEASUREMENT METHOD, DEVICE, SYSTEM AND COMPUTER-READABLE STORAGE MEDIUM**

VOLUMENMESSVERFAHREN, -VORRICHTUNG, -SYSTEM UND COMPUTERLESBARES SPEICHERMEDIUM

PROCÉDÉ DE MESURE DE VOLUME, DISPOSITIF, SYSTÈME ET SUPPORT D'INFORMATIONS LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2019 CN 201910275709**

(43) Date of publication of application:
**14.10.2020 Bulletin 2020/42**

(73) Proprietors:
• **Nuctech Company Limited**
  **Beijing 100084 (CN)**
• **Nuctech (Beijing) Company Limited**
  **Beijing 101500 (CN)**
• **Tsinghua University**
  **Haidian District,**
  **Beijing 100084 (CN)**

(72) Inventors:
• **WANG, Yongming**
  **Beijing 100084 (CN)**
• **TU, Junjie**
  **Beijing 100084 (CN)**
• **LIU, Bicheng**
  **Beijing 100084 (CN)**
• **ZHANG, Haoran**
  **Beijing 100084 (CN)**
• **XU, Yanwei**
  **Beijing 100084 (CN)**
• **YU, Weifeng**
  **Beijing 100084 (CN)**
• **HU, Yu**
  **Beijing 100084 (CN)**
• **ZONG, Chunguang**
  **Beijing 100084 (CN)**

(74) Representative: **Meissner Bolte Partnerschaft mbB**
**Patentanwälte Rechtsanwälte**
**Postfach 86 06 24**
**81633 München (DE)**

(56) References cited:
**EP-A1- 2 194 374     GB-A- 2 355 071
US-A- 5 739 426**

## Description

## TECHNICAL FIELD

The present disclosure relates to the field of radiation, and in particular, to a volume measurement method, a device, a system, and a computer-readable storage medium.

## BACKGROUND

The related arts provides a channel-type volume measurement system, which generally uses a regional laser sensor as a measurement tool to obtain shape data of a measured object. A volume of the measured object can be obtained by using a specific algorithm. For example, a system that simply measures the extreme values of the length, width, and height of an object can be used in the fields of height limit, width limit inspection, and ro-ro ship storage bin allocation in the transportation industry. Another volume measurement system, in addition to obtaining the extreme values of the length, width, and height of the measured object, can accurately measure a side profile of the object, and then calculate an object volume based on a real-time speed of the vehicle. This system is restricted to the image recognition algorithm that can only rely on the regional laser to roughly obtain the height of the vehicle chassis, which is then removed in the volume calculation to achieve the purpose of "chassis peeling".

GB2355071A describes a non-contact volume measurement, which can measure the volume of an object by means of penetrating radiation such as X-rays, the object is placed in an irradiation zone and measurements of amounts of radiation passing through respective areas of the object are made. From each measurement, a value representative of the "thickness" of the object at that area is derived, and these values are added to calculate a "volume" of the object. The object may be moved by a conveyor through the irradiation zone which is formed from a radiation beam shaped by aperture plates, while the radiation is measured by means of a linear array of photodiodes below a phosphorescent strip extending perpendicularly to the movement direction. Sensor module controllers signal a sensor controller which feeds a PC for the processing steps. A temperature sensing element is also included for correction of sensor output as the ambient temperature changes.

US5739426A1 describes a volume measurement apparatus and method of use. The volume measurement apparatus comprises a vertical leg attached to a horizontal leg, and at least one sensor attached to the legs. A trackball is rotatably attached to the volume measurement apparatus, and is electrically connected to a trackball movement detection means. A volume measurement means is electrically connected to the trackball movement detection means and to the at least one sensor. The method of use includes the steps of rolling the volume measurement apparatus past an object whose volume is to be measured, such that the sensor(s) will scan cross sectional areas of an object embraced within the volume measurement apparatus vertical leg and horizontal leg at pre-set intervals, figuring only the area that the sensor(s) report as solid, which is the object cross section return, and summing the products of the object cross section returns multiplied by the increment. An alternative method of use involves swiveling the volume measurement apparatus such that an object being measured is encompassed within the sweep of the legs during the swiveling motion. An alternate embodiment apparatus comprises a first leg attached to a second leg, a forward-looking sensor, a sideward-looking sensor, and a rearward-looking sensor disposed at an extreme of said first leg opposite said second leg, a forward-looking sensor, a sideward-looking sensor, and a rearward-looking sensor disposed at an extreme of said second leg opposite said first leg, a forward-looking sensor, a sideward-looking sensor, and a rearward-looking sensor disposed at an intersection of said first leg and said second leg. An alternate method comprises the final step of subtracting a volume of voids detected by the forward-looking or rearward-looking sensors from the total volume measured.

EP2194374A1 describes an examination apparatus, in which an X-ray inspection apparatus is equipped with an X-ray irradiator, an X-ray line sensor, an image generating component, a region identifying component, a weight estimating component and a weight determining component and inspects a chain of connected packages including a plurality of bags that are connected in a chain. The X-ray irradiator irradiates the chain of connected packages with X-rays. The X-ray line sensor receives the X-rays from the X-ray irradiator. The image generating component generates an X-ray image on the basis of the X-rays that the X-ray line sensor has received. The region identifying component identifies discrete package regions from the X-ray image. The weight estimating component estimates weight values with respect to the discrete package regions. The weight determining component determines the chain of connected packages as being abnormal in weight when any of the weight values falls outside a predetermined range.

## SUMMARY

The inventors have realized that the systems provided by the related arts do not have the ability to penetrate substances or the ability to identify substances, so they cannot distinguish between cargoes and a vehicle chassis. When the cargoes are placed in a container such as a hopper or a container, the system can only obtain the volume of the container, not the actual volume of the object. Moreover, related technologies can only perform a calculation based on the extreme values of the length, width, and height of an object. For irregular objects, its size cannot be measured accurately. Therefore, the calculation accuracy of the related arts is low.

A technical problem to be solved by the embodiments of the present disclosure is: how to improve the accuracy of volume measurement.

According to a first aspect of some embodiments of the present disclosure, a computer implemented volume measurement method is provided, comprising: determining thicknesses of a measured object in each of directions of multiple X-rays emitted from an accelerator target according to measurement results of the X-rays; determining a cross section area of the measured object according to the thicknesses corresponding to each of the X-rays in the cross section of the measured object; and determining a volume of the measured object according to the cross section area.

In some embodiments, the determining a cross section area of the measured object according to the thicknesses corresponding to each of the X-rays in the cross section of the measured object comprises: calculating areas of sub-regions divided by the X-rays in the cross section of the measured object according to the thicknesses corresponding to each of the X-rays in the cross section of the measured object; and determining the cross section area of the measured object according to the areas of all sub-regions of the cross section.

According to the invention, the volume measurement method further comprises: determining a proximal distance between the accelerator target and a proximal intersection point on each of the X-rays emitted from the accelerator target, wherein the proximal intersection point is one of the intersection points of the X-ray and the measured object that is closest to the accelerator target; wherein the determining a cross section area of the measured object according to the thicknesses corresponding to each of the X-rays in the cross section of the measured object comprises: determining the cross section area of the measured object according to the thicknesses and the proximal distance corresponding to each of the X-rays in the cross section of the measured object.

In some embodiments, the determining the cross section area of the measured object according to the thicknesses and the proximal distance corresponding to each of the X-rays in the cross section of the measured object comprises: determining a first parameter according to proximal distances corresponding to two adjacent X-rays corresponding to each of all sub-regions of the cross section of the measured object; determining a second parameter according to the thicknesses of the measured object in directions of the two adjacent X-rays; calculating an area of a sector ring as an area of the sub-region corresponding to the two adjacent X-rays, with the accelerator target as a center of a circle where the sector ring locates, an angle between the two adjacent X-rays as a central angle of the circle, the first parameter as an inner diameter of the sector ring, and the second parameter as a difference between an outer diameter and the inner diameter of the sector ring; and determining the cross section area of the measured object according to areas of all sub-regions of the cross section.

In some embodiments, the determining a proximal distance between the accelerator target and a proximal intersection point on each of the X-rays emitted from the accelerator target comprises: acquiring first relative position information between a laser scanner and each of one or more points on a measurement surface of the measured object according to a measurement result of the laser scanner; acquiring second relative position information between the laser scanner and the accelerator target; and determining a proximal distance between the accelerator target and a proximal intersection point on each of the X-rays according to the first relative position information and the second relative position information.

In some embodiments, the accelerator target comprises a first accelerator target and a second accelerator target, and the cross section area of the measured object comprises a first area of the cross section and a second area of the cross section; the first accelerator target is located in a first orientation of the measured object and emits multiple first X-rays, and the first area is determined according to measurement results of the first X-rays in the cross section; the second accelerator target is located in a second orientation of the measured object and emits multiple second X-rays, and the second area is determined according to measurement results of the second X-rays in the cross section; and the determining a volume of the measured object according to the cross section area comprises: determining the volume of the measured object according to a maximum value of the first cross section area and the second cross section area.

In some embodiments, the directions of the X-rays emitted by the accelerator target are perpendicular to a moving direction of the measured object.

In some embodiments, the determining a volume of the measured object according to the cross section area comprises: acquiring a moving speed and a time of passing a preset marker of the measured object; and determining the volume of the measured object according to the moving speed, the time, and the cross section area of the measured object.

In some embodiments, the cross section area of the measured object comprises areas of multiple cross sections in the measured object; and the determining a volume of the measured object according to the cross section area comprises: determining volumes of sub-blocks divided by the multiple cross sections in the measured object according to distances between adjacent cross sections of the multiple cross sections; and determining a volume of the measured object according to the volumes of the sub-blocks of the measured object.

In some embodiments, the volume measurement method further comprises: acquiring a weight of the measured object; calculating the density of the measured object according to the weight and the volume of the measured object; and determining that the status of the measured object is abnormal in case that a difference between the calculated density of the measured object and a density of the measured object obtained in advance is greater than a preset range.

In some embodiments, the measured object is located on a vehicle, and the accelerator target is higher than the lowest plane of the measured object.

According to a second aspect of some embodiments of the present disclosure, a volume measurement device is provided, comprising: a thickness determination module configured to determine thicknesses of a measured object in each of directions of multiple X-rays emitted from an accelerator target according to measurement results of the X-rays; a cross section area determination module configured to determine a cross section area of the measured object according to the thicknesses corresponding to each of the X-rays in the cross section of the measured object; a volume determination module configured to determine a volume of the measured object according to the cross section area.

According to a third aspect of some embodiments of the present disclosure, a volume measurement system is provided, comprising: the volume measurement device; and an accelerator target configured to emit multiple X-rays toward the measured object to obtain measurement results.

According to a fourth aspect of some embodiments of the present disclosure, a volume measurement device is provided, comprising: a memory; a processor coupled to the memory, the processor configured to, based on instructions stored in the memory, carry out any one of the foregoing volume measurement methods.

According to a fifth aspect of some embodiments of the present disclosure, a computer-readable storage medium is provided on which a computer program is stored, which executed by a processor, implement any one of the foregoing volume measurement methods.

Some embodiments of the present disclosure have the following advantages or beneficial effects: by applying X-ray scanning to volume measurement, information about the type of substance and size information at multiple positions and angles of the measured object can be obtained from the X-ray measurement results, so that the volume of the measured object can be measured more accurately.

Other features and advantages of the present disclosure will become apparent from the following detailed description of exemplary embodiments of the present disclosure with reference to the accompanying drawings.

**BRIEF DESCRIPTION OF THE DRAWINGS**

In order to more clearly explain the embodiments of the present disclosure or the technical solutions in the prior art, a brief introduction will be given below for the drawings required to be used in the description of the embodiments or the prior art. It is obvious that, the drawings illustrated as follows are merely some of the embodiments of the present disclosure. For a person skilled in the art, he or she may also acquire other drawings according to such drawings on the premise that no inventive effort is involved.

FIG. 1 shows a schematic flowchart of a volume measurement method according to the claimed invention;

FIG. 2 shows an exemplary schematic diagram of a plurality of X-rays in a same plane and a cross section of a measured object in the same plane;

FIG. 3 shows a schematic flowchart of a method for calculating a cross section area according to some embodiments of the present disclosure;

FIG. 4 shows a schematic flowchart of a method for determining a cross section area according to the claimed invention;

FIG. 5 shows a schematic flowchart of a method for determining a proximal distance according to some embodiments of the present disclosure;

FIG. 6 shows a schematic measurement diagram of a laser scanner and an accelerator target according to some embodiments of the present disclosure;

FIG. 7 shows a schematic flowchart of a method for calculating a cross section area according to still other embodiments of the present disclosure;

FIG. 8A shows a schematic flowchart of a volume measurement method according to other embodiments of the present disclosure;

FIG. 8B shows a schematic diagram of a measurement scenario according to some embodiments of the present disclosure;

FIG. 9 shows a schematic flowchart of a volume determination method according to some embodiments of the present disclosure;

FIG. 10 shows a schematic flowchart of a volume determination method according to other embodiments of the present disclosure;

FIG. 11 shows a schematic flowchart of a security inspection method according to some embodiments of the present disclosure;

FIG. 12 shows a schematic structural diagram of a volume measurement device according to some embodiments of the present disclosure;

FIG. 13 shows a schematic structural diagram of a volume measurement system according to some embodiments of the present disclosure;

FIG. 14 shows a schematic structural diagram of a volume measurement device according to other embodiments of the present disclosure;

FIG. 15 shows a schematic structural diagram of a volume measurement device according to further embodiments of the present disclosure.

**DETAILED DESCRIPTION**

A clear and complete description will be given below for the technical solution of some embodiments of this disclosure with reference to the figures. Obviously, merely some embodiments of this disclosure, rather than all embodiments thereof, is given herein. The following description of at least one exemplary embodiment is in fact merely illustrative and is in no way intended as a limitation to the disclosure, its application or use. All other embodiments obtained by those of ordinary skill in the art based on the embodiments of the present disclosure without creative efforts shall fall within the protection scope of the present disclosure.

Unless otherwise specified, the relative arrangement, numerical expressions and numerical values of the components and steps set forth in these examples do not limit the scope of the disclosure.

At the same time, it should be understood that, for ease of description, the dimensions of the various parts shown in the drawings are not drawn to actual proportions.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

It should be noticed that similar reference numerals and letters are denoted by the like in the accompanying drawings, and therefore, once an article is defined in a drawing, there is no need for further discussion in the accompanying drawings.

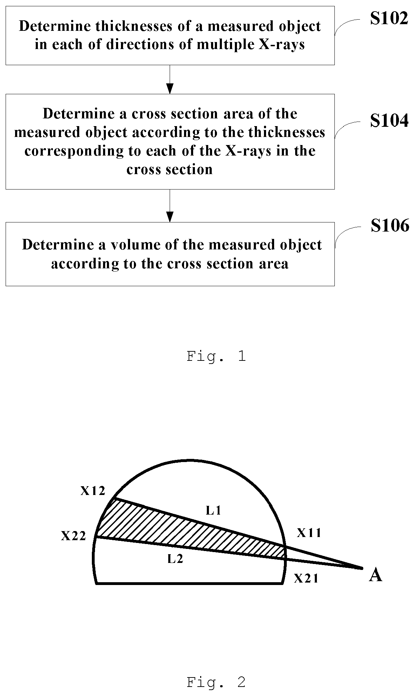

FIG. 1 shows a schematic flowchart of a volume measurement method according to some embodiments of the present disclosure. As shown in FIG. 1, the volume measurement method of this embodiment includes steps S102 to S106.

In step S102, thicknesses of a measured object in each of directions of multiple X-rays emitted from an accelerator target is determined according to measurement results of the X-rays.

Density information of an object through which X-rays pass can be obtained to discriminate substances of different materials. In addition, thickness information of each substance can be obtained. Therefore, even if the measured object is in, for example, a container, the thickness of the measured object can be determined from the measurement result.

In some embodiments, an accelerator target can emit a set of rays in the same plane at the same time, and the intersection of the plane and the measured object is a cross section of the measured object. This set of rays is located in the same cross section of the measured object.

In some embodiments, the accelerator target may be fixed or movable. For example, during measurement, the accelerator target may be stationary and the measured object may be movable, or the measured object may be stationary and the accelerator target may be movable. Therefore, a measurement can be performed through emitting radiation rays at different times by the accelerator target, and thicknesses corresponding to the X-rays on multiple cross sections of the measured object can be obtained.

In step S104, a cross section area of the measured object is determined according to the thicknesses corresponding to each of the X-rays in the cross section of the measured object.

In this disclosure, the cross section area of the measured object comprises areas of one or more cross sections.

FIG. 2 shows an exemplary schematic diagram of a plurality of X-rays in a same plane and a cross section of a measured object. As shown in FIG. 2, X-ray L1 emitted from an accelerator target A intersects with the measured object, resulting in intersection points X11 and X12, where X11 is a proximal intersection point and X12 is a distal intersection point. The distance between the intersections X11 and X12 is the thickness of the measured object in the direction of X-ray L1. Similarly, the distance between the intersections X21 and X22 is the thickness of the measured object in the direction of X-ray L2.

In some situations, the measured object is placed in a container. In this case, one of the intersection points between the X-ray and the container of the measured object that is closest to the accelerator target can be approximated as the proximal intersection point.

In step S106, a volume of the measured object is determined according to the cross section area.

By applying X-ray scanning to volume measurement, information about the type of substance and size information at multiple positions and angles of the measured object can be obtained from the X-ray measurement results, so that the volume of the measured object can be measured more accurately. The above embodiments can be applied to objects with regular and irregular shapes. Furthermore, even if the measured object is located in a container, the volume of the measured object can be obtained without opening the container. Therefore, the range of application of volume measurement is extended, and the measurement efficiency is improved. No matter the object is logs, steel bars, stones, or the like directly loaded on a flatbed vehicle, or coal, gravel, or the like placed in a container, the embodiment of the present disclosure can perform a volume measurement with higher accuracy.

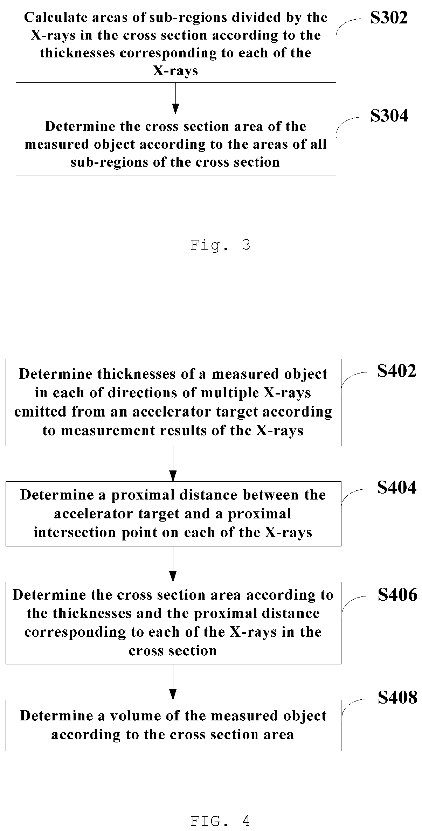

The inventors have realized that in some embodiments, the cross section area of the measured object can be calculated using the principle of calculus. An embodiment of a method of calculating the cross section area of a measured object according to the present disclosure will be described below with reference to FIG. 3.

FIG. 3 shows a schematic flowchart of a method for calculating a cross section area of the measured object according to some embodiments of the present disclosure. As shown in FIG. 3, the method of calculating an area of a cross section in this embodiment includes steps S302 to S304.

In step S302, areas of sub-regions divided by the X-rays in the cross section of the measured object are calculated according to the thicknesses corresponding to each of the X-rays in the cross section of the measured object.

In some embodiments, each sub-region may be approximated by a regular shape such as a quadrangle or a sector ring to facilitate calculation. In the calculation, it is also possible to determine more shape data of the sub-region in conjunction with an angle between two adjacent rays.

In step S304, the cross section area of the measured object is determined according to the areas of all sub-regions of the cross section.

Since each X-ray can produce corresponding measurement information, a preliminary calculation can be performed on sub-regions divided by the X-rays, and then the areas of the various sub-regions are summarized. Therefore, the calculation difficulty is reduced, and the calculation efficiency is improved. This method is suitable for calculating the area of a cross section of various shapes.

In some embodiments, the angle between the adjacent X-rays can be obtained from a related parameter of the accelerator target. In combination with a distance from the accelerator target to the measured object, more size information of the cross section can be obtained. An embodiment of the method of determining a cross section area of the present disclosure will be described below with reference to FIG. 4.

FIG. 4 shows a schematic flowchart of a method for determining a cross section area according to other embodiments of the present disclosure. As shown in FIG. 4, the method of determining a cross section area in this embodiment includes steps S402 to S408.

In step S402, thicknesses of a measured object in each of directions of multiple X-rays emitted from an accelerator target is determined according to measurement results of the X-rays.

In step S404, a proximal distance between the accelerator target and a proximal intersection point on each of the X-rays emitted from the accelerator target is determined, wherein the proximal intersection point is one of the intersection points of the X-ray and the measured object that is closest to the accelerator target.

For example, X11 in FIG. 2 is the proximal intersection point corresponding to ray L1, and X21 is the proximal intersection point corresponding to ray L2. Through determining the lengths of AX11 and AX21, the lengths of AX12 and AX22 can be further calculated based on the obtained thicknesses, or the distance between X11 and X21 can be further calculated based on the angle θ of L1 and L2. Therefore, the area of a cross section can be easily calculated, thus the cross section area can be easily calculated.

In step S406, the cross section area of the measured object is determined according to the thicknesses and the proximal distance corresponding to each of the X-rays in the cross section of the measured object.

In step S408, a volume of the measured object is determined according to the cross section area.

Through the method of the above embodiment, the cross section area of the measured object can be calculated in conjunction with the distances between the accelerator target and the proximal intersection points, so that the accuracy of the calculation can be further improved.

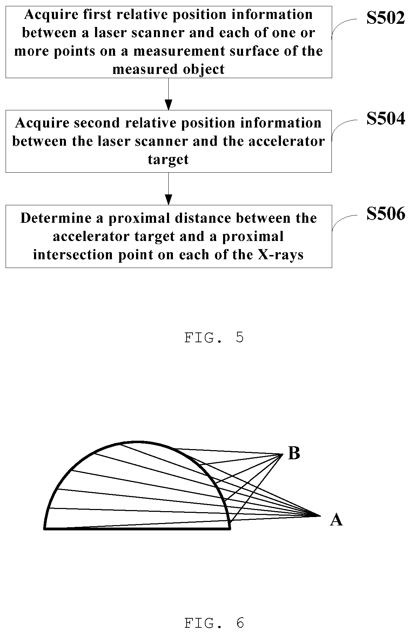

In some embodiments, a distance between the accelerator target and a proximal intersection point can be obtained based on a scan result of a laser scanner. An embodiment of the method of determining a proximal distance of the present disclosure will be described below with reference to FIG. 5.

FIG. 5 shows a schematic flowchart of a method for determining a proximal distance according to some embodiments of the present disclosure. As shown in FIG. 5, the method of determining a proximal distance in this embodiment includes steps S502 to S506.

In step S502, first relative position information between a laser scanner and each of one or more points on a measurement surface of the measured object according to a measurement result of the laser scanner is acquired. The first relative position may include distance information and direction information, for example. Therefore, the laser scanner can obtain profile information of the measurement surface of the measured object.

The measurement surface refers to a first surface of the measured object that laser rays emitted by the laser scanner and radiation rays emitted by the accelerator target contact. For example, if the measured object is placed on a truck and the laser scanner and the accelerator target are located on the right side of the vehicle, the right side of the measured object is the measurement surface.

In step 504, second relative position information between the laser scanner and the accelerator target is acquired.

In step S506, a proximal distance between the accelerator target and a proximal intersection point on each of the X-rays is determined according to the first relative position information and the second relative position information.

Therefore, more measurement data can be obtained using the measurement result of the laser scanner, and the accuracy of the volume measurement is improved.

FIG. 6 shows a schematic measurement diagram of a laser scanner and an accelerator target according to some embodiments of the present disclosure. As shown in FIG. 6, the laser scanner B generates laser rays scanning a measurement surface of the measured object to produce profile data of the measurement surface; the accelerator target A emits X-rays that penetrate the measured object.

In some embodiments, the relative position information may be represented by coordinates. For example, two coordinate systems, such as polar coordinate systems, can be established with A and B as the origins of the coordinates, respectively. Since the relative position between A and B is known, a mapping relationship between the two coordinate systems can be obtained. The coordinates of each point on the measurement surface in the coordinate system with A as the origin can be obtained according to the measurement results of rays emitted by the laser scanner B at multiple angles. The coordinates of each point on the measurement surface in the coordinate system with B as the origin can be obtained according to the mapping relationship between the coordinate systems. Therefore, a distance between the accelerator target A and a point on the measurement surface can be obtained, and then a proximal distance between the accelerator target and the proximal intersection point on each X-ray can be further obtained.

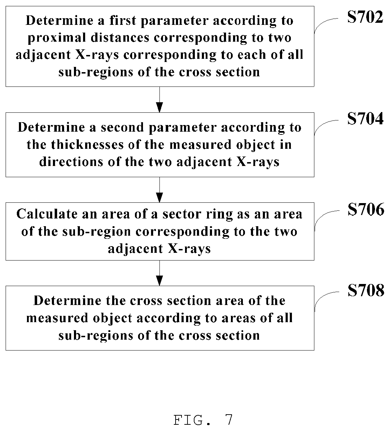

After further analysis, the inventors have realized that because the X-rays are radiated with the accelerator target as the center, two adjacent X-rays can divide a cross section of the measured object into an approximate sector ring shape. Therefore, an approximate area of a sub-region of the cross section can be obtained by calculating the area of the sector ring. An embodiment of a method of calculating a cross section area of the present disclosure will be described below with reference to FIG. 7.

FIG. 7 shows a schematic flowchart of a method for calculating a cross section area according to still other embodiments of the present disclosure. As shown in FIG. 7, the method of calculating a cross section area in this embodiment includes steps S702 to S708.

In step S702, a first parameter is determined according to proximal distances corresponding to two adjacent X-rays corresponding to each of all sub-regions of the cross section of the measured object. For example, any one of an average value, a maximum value, or a minimum value of the two proximal distances may be used as the first parameter.

In step S704, a second parameter is determined according to the thicknesses of the measured object in directions of the two adjacent X-rays. For example, any one of an average value, a maximum value, or a minimum value of the two thickness values may be used as the second parameter.

In step S706, an area of a sector ring is calculated as an area of the sub-region corresponding to the two adjacent X-rays, with the accelerator target as a center of a circle where the sector ring locates, an angle between the two adjacent X-rays as a central angle of the circle, the first parameter as an inner diameter of the sector ring, and the second parameter as a difference between an outer diameter and the inner diameter of the sector ring.

In step S708, the cross section area of the measured object is determined according to areas of all sub-regions of the cross section.

The schematic diagram of calculating the area of a sub-region according to some embodiments of the present disclosure will be described below with reference to FIG. 2. As shown in FIG. 2, a sub-region divided by the two adjacent X-rays L1 and L2 is represented with a diagonal background. The angle between X-rays L1 and L2 is θ. The intersection points between X-ray L1 and the measured object are X11 and X12, and the intersection points between X-ray L2 and the measured object are X21 and X22. The area of this sub-region can be regarded as a difference between the area of the approximate sector X12AX22 and the area of the approximate sector X11AX21. In some embodiments, the area $S_i$ of the sub-region may be determined by formula (1):

$$S_i = \frac{\theta}{360}\pi(2rd + d^2) \qquad (1)$$

In formula (1), r is the inner diameter of the sector ring, that is, the first parameter; d is the difference between the outer diameter and the inner diameter, that is, the second parameter.

With the method of the above embodiment, an approximate area can be calculated by treating each sub-region as a sector ring. Since the shape of the sector ring is very close to the actual shape of the sub-region, the calculated area of the sub-region is more accurate, thereby improving the accuracy of the volume measurement.

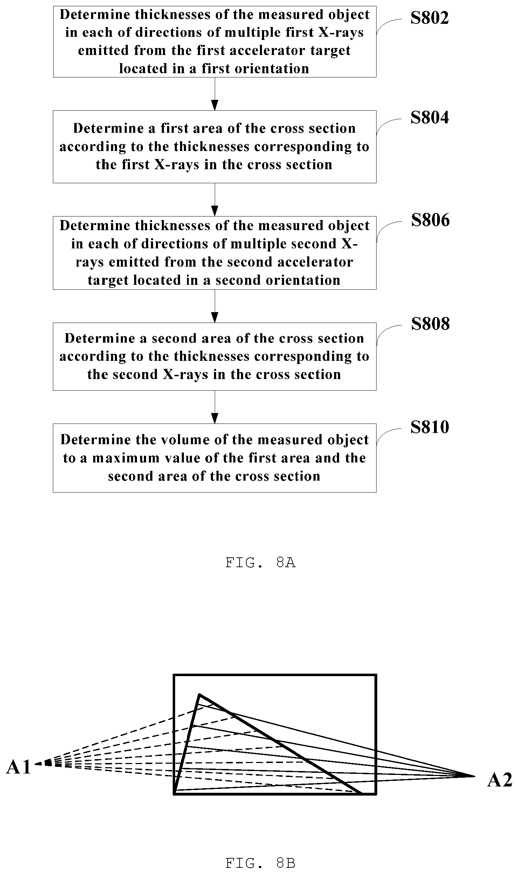

In some cases, if the measured object is located in a container, the shape of the measured object may be very asymmetric, or it may has a skewed distribution. In order to further improve the accuracy of volume measurement, in some embodiments, the volume may be determined based on multiple measurement results obtained with accelerator targets located in multiple orientations of the measured object. An embodiment of the volume measurement method of the present disclosure will be described below with reference to FIGS. 8A and 8B.

FIG. 8A shows a schematic flowchart of a volume measurement method according to other embodiments of the present disclosure. In this embodiment, the accelerator target comprises a first accelerator target and a second accelerator target, and the cross section area of the measured object comprises a first area of the cross section and a second area of the cross section. As shown in FIG. 8A, the volume measurement method of this embodiment includes steps S802 to S810.

In step S802, thicknesses of the measured object in each of directions of multiple first X-rays emitted from the first accelerator target located in a first orientation of the measured object is determined according to measurement results of the first X-rays.

In step S804, a first area of the cross section is determined according to the thicknesses corresponding to the first X-rays in the cross section.

In step S806, thicknesses of the measured object in each of directions of multiple second X-rays emitted from the second accelerator target located in a second orientation of the measured object is determined according to measurement results of the second X-rays.

In some embodiments, the first orientation and the second orientation are a pair of opposite orientations centered on the measured object.

In step S808, a second area of the cross section is determined according to the thicknesses corresponding to the second X-rays in the cross section.

Therefore, the first area and the second area are different calculation results of the same cross section.

In step S810, the volume of the measured object is determined according to a maximum value of the first area and the second area of the cross section.

FIG. 8B shows a schematic diagram of a measurement scenario according to some embodiments of the present disclosure. As shown in FIG. 8B, the measured object located in the square container is inclined toward the left inner wall of the container, and there is a large gap with the right inner wall of the container. When the volume is calculated in conjunction with the measurement data of a laser scanner, since only a distance from the accelerator target to a container wall can be measured based on a measurement result of the laser scanner, in the case of ignoring the thickness of the container wall, the area determined based on the measurement result of the accelerator target located at the position A1 on the left side of the measured object is more accurate. The area determined based on the measurement result of the accelerator target located at the position A2 on the right side of the measured object may be smaller. To facilitate the distinction, the X-rays emitted by the accelerator target at the position A1 in FIG. 8B are indicated by dashed lines, and the rays emitted by the accelerator target at the position A2 are indicated by the solid lines.

In some embodiments, multiple accelerator targets can be provided to perform measurements simultaneously, or a movable accelerator target can be provided to perform measurements at different times and at different positions.

Through the method of the above embodiment, the accuracy of volume measurement can be further improved.

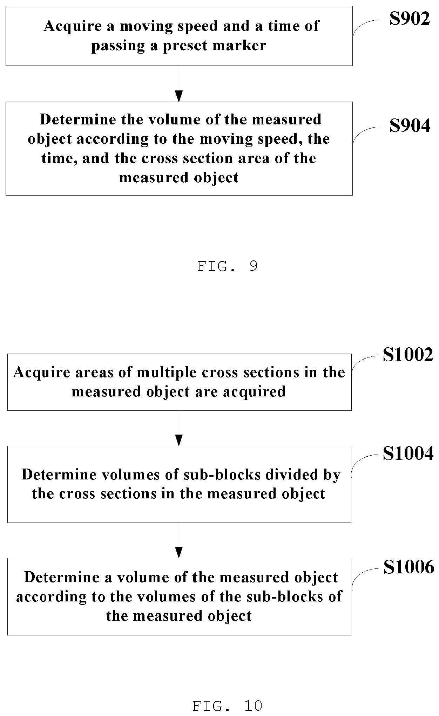

After obtaining the cross section area, a volume can be determined according to a length of the measured object in a direction perpendicular to the cross section. In some embodiments, the directions of the X-rays emitted by the accelerator target are perpendicular to a moving direction of the measured object. Therefore, if the measured object is a moving object, the volume can be determined by a moving speed and a time of passing a preset marker of the measured object. An embodiment of the volume determination method will be described below with reference to FIG. 9.

FIG. 9 shows a schematic flowchart of a volume determination method according to some embodiments of the present disclosure. As shown in FIG. 9, the volume determination method in this embodiment includes steps S902 to S904.

In step S902, a moving speed and a time of passing a preset marker of the measured object are acquired. The preset marker may be a measurement device, such as a camera or a laser scanner.

In step S904, the volume of the measured object is determined according to the moving speed, the time, and the cross section area of the measured object.

Therefore, the volume of the measured object in motion can be quickly determined.

In some embodiments, the calculation of the volume may be a segmented process. Below, an embodiment of determining a volume in a segmented process will be described with reference to FIG. 10.

FIG. 10 shows a schematic flowchart of a volume determination method according to other embodiments of the present disclosure. In this embodiment, the cross section area of the measured object comprises areas of multiple cross sections in the measured object. As shown in FIG. 10, the volume determination method of this embodiment includes steps S1002 to S1006.

In step S1002, areas of multiple cross sections in the measured object are acquired.

In step S1004, volumes of sub-blocks divided by the cross sections in the measured object are determined according to distances between adjacent cross sections of the multiple cross sections.

In step S1006, a volume of the measured object is determined according to the volumes of the sub-blocks of the measured object.

For example, if the measured object is stationary, areas of multiple cross sections and distances between adjacent sections can be obtained by moving a measuring device such as an accelerator target; As another example, if the measured object is a moving object, areas of multiple cross sections can be obtained at different times using a stationary measurement device, and distances between adjacent sections are determined according to the moving speed and passing time of the measured object.

The volume of an irregular-shaped object can be determined more accurately with the method of the above embodiment.

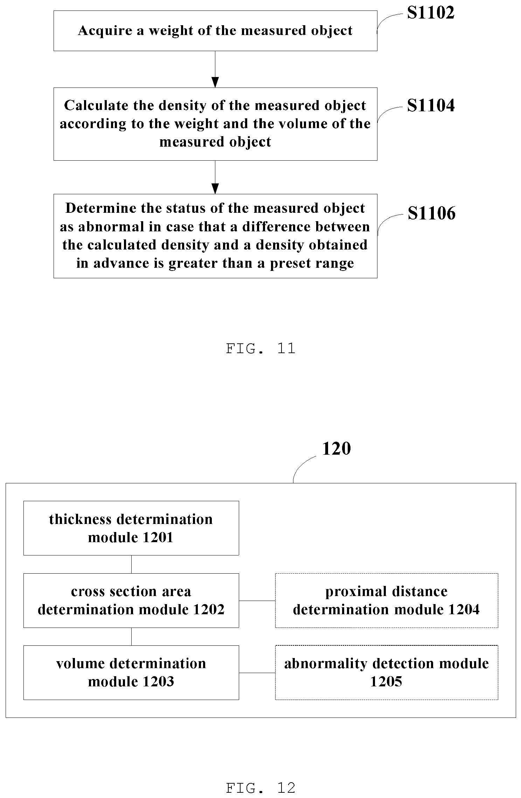

In some embodiments, a security inspection may be further performed based on the volume measurement result. An embodiment of the security inspection method of the present disclosure will be described below with reference to FIG. 11.

FIG. 11 shows a schematic flowchart of a security inspection method according to some embodiments of the present disclosure. As shown in FIG. 11, the security inspection method of this embodiment includes steps S1102 to S1106.

In step S1102, a weight of the measured object is acquired.

For example, the measured object can be placed on a weighing device. When the measured object is located on a vehicle, the vehicle can be driven in a weighing aisle to obtain a total weight of the vehicle and the measured object. Through obtaining a vehicle type corresponding to the vehicle license plate, a net weight of the vehicle can be obtained. A difference between the total weight and the net weight is the weight of the measured object.

In step S1104, the density of the measured object is calculated according to the weight and the volume of the measured object.

In step S1106, the status of the measured object is determined as abnormal in case that a difference between the calculated density of the measured object and a density of the measured object obtained in advance is greater than a preset range. The density of the measured object obtained in advance may be a density corresponding to an item type declared in advance.

If the status of the measured object is abnormal, for example, an alarm can be issued for further processing or recording by the security inspector.

Therefore, even if the measured object is loaded in the container, the density of the measured object can be detected quickly without opening the container, which improves the efficiency and convenience of the security inspection.

In some embodiments, if the measured object is located on a vehicle, the accelerator target may be higher than the lowest plane of the measured object. For example, the accelerator target can be automatically raised to ensure that the accelerator target is not lower than the lowest plane of the measured object. This tries to make the X-rays emitted by the accelerator target directly pass through the measured object, and reduce the amount of X-rays that penetrate unrelated objects such as the tires and vehicle chassis as much as possible. Therefore, the accuracy of volume measurement can be further improved.

An embodiment of a volume measurement device of the present disclosure will be described below with reference to FIG. 12.

FIG. 12 shows a schematic structural diagram of a volume measurement device according to some embodiments of the present disclosure. As shown in FIG. 12, the volume measurement device 1200 of this embodiment includes a thickness determination module 1201 configured to determine thicknesses of a measured object in each of directions of multiple X-rays emitted from an accelerator target according to measurement results of the X-rays; a cross section area determination module 1202 configured to determine a cross section area of the measured object according to the thicknesses corresponding to each of the X-rays in the cross section of the measured object; a volume determination module 1203 configured to determine a volume of the measured object according to the cross section area.

In some embodiments, the cross section area determination module 1202 is further configured to calculate areas of sub-regions divided by the X-rays in the cross section of the measured object according to the thicknesses corresponding to each of the X-rays in the cross section of the measured object; and to determine the cross section area of the measured object according to the areas of all sub-regions of the cross section.

According to the invention, the volume measurement device 1200 further includes: a proximal distance determination module 1204 configured to determine a proximal distance between the accelerator target and a proximal intersection point on each of the X-rays emitted from the accelerator target, wherein the proximal intersection point is one of the intersection points of the X-ray and the measured object that is closest to the accelerator target; the cross section area determination module 1202 is further configured to determine the cross section area of the measured object according to the thicknesses and the proximal distance corresponding to each of the X-rays in the cross section of the measured object.

In some embodiments, the proximal distance determination module 1204 is further configured to acquire first relative position information between a laser scanner and each of one or more points on a measurement surface of the measured object according to a measurement result of the laser scanner; to acquire second relative position information between the laser scanner and the accelerator target; and to determine a proximal distance between the accelerator target and a proximal intersection point on each of the X-rays according to the first relative position information and the second relative position information.

In some embodiments, the cross sectional area determination module 1202 is further configured to determine a first parameter according to proximal distances corresponding to two adjacent X-rays corresponding to each of all sub-regions of the cross section of the measured object; to determine a second parameter according to the thicknesses of the measured object in directions of the two adjacent X-rays; to calculate an area of a sector ring as an area of the sub-region corresponding to the two adjacent X-rays, with the accelerator target as a center of a circle where the sector ring locates, an angle between the two adjacent X-rays as a central angle of the circle, the first parameter as an inner diameter of the sector ring, and the second parameter as a difference between an outer diameter and the inner diameter of the sector ring; and to determine the cross section area of the measured object according to areas of all sub-regions of the cross section.

In some embodiments, the accelerator target comprises a first accelerator target and a second accelerator target, and the cross section area of the measured object comprises a first area of the cross section and a second area of the cross section; the first accelerator target is located in a first orientation of the measured object and emits multiple first X-rays, and the first area is determined according to measurement results of the first X-rays in the cross section; the second accelerator target is located in a second orientation of the measured object and emits multiple second X-rays, and the second area is determined according to measurement results of the second X-rays in the cross section; the volume determination module 1203 is further configured to determine the volume of the measured object according to a maximum value of the first cross section area and the second cross section area.

In some embodiments, the directions of the X-rays emitted by the accelerator target are perpendicular to a moving direction of the measured object.

In some embodiments, the volume determination module 1203 is further configured to acquire a moving speed and a time of passing a preset marker of the measured object; and to determine the volume of the measured object according to the moving speed, the time, and the cross section area of the measured object.

In some embodiments, the cross section area of the measured object comprises areas of multiple cross sections in the measured object; the volume determination module 1203 is further configured to determine volumes of sub-blocks divided by the multiple cross sections in the measured object according to distances between adjacent cross sections of the multiple cross sections; and to determine a volume of the measured object according to the volumes of the sub-blocks of the measured object.

In some embodiments, the volume measurement device 1200 further includes: an abnormality detection module 1205 configured to acquire a weight of the measured object; calculate the density of the measured object according to the weight and the volume of the measured object; and to determine that the status of the measured object is abnormal in case that a difference between the calculated density of the measured object and a density of the measured object obtained in advance is greater than a preset range.

In some embodiments, the measured object is located on a vehicle, and the accelerator target is higher than the lowest plane of the measured object.

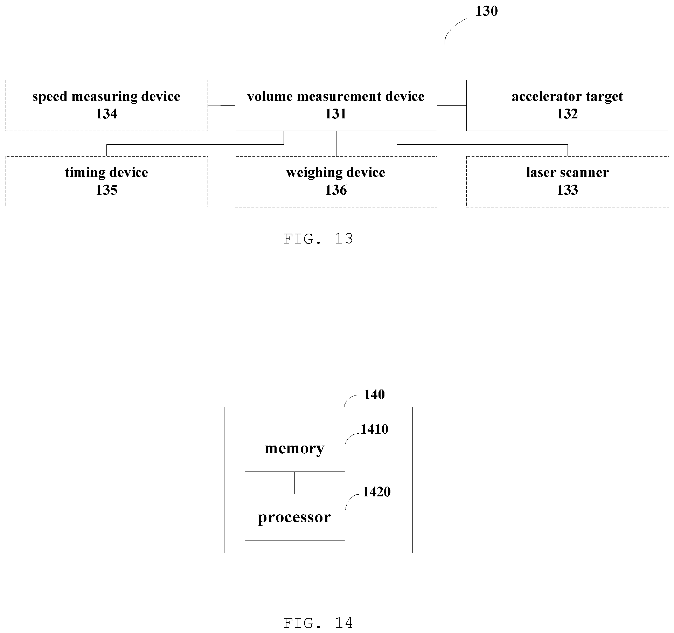

An embodiment of a volume measurement system of the present disclosure will be described below with reference to FIG. 13.

FIG. 13 shows a schematic structural diagram of a volume measurement system according to some embodiments of the present disclosure. As shown in FIG. 13, the volume measurement system 130 of this embodiment includes a volume measurement device 131 and an accelerator target 132. For the specific implementation of the volume measurement device 131, reference may be made to the volume measurement device 120 in the foregoing embodiment, which will not be repeated herein. The accelerator target 132 is configured to emit a plurality of X-rays toward the measured object to obtain measurement results.

In some embodiments, the volume measurement system 130 further includes a laser scanner 133 configured to scan a measurement surface of the measured object.

In some embodiments, the volume measurement system 130 further includes a speed measuring device 134 configured to detect a moving speed of the measured object; and a timing device 135 configured to detect a time of passing a preset marker of the measured object.

In some embodiments, the volume measurement system 130 further includes a weighing device 136 configured to measure a weight of the measured object.

FIG. 14 is a schematic structural diagram of a volume measurement device according to other embodiments of the present disclosure. As shown in FIG. 14, the volume measurement device 140 of this embodiment includes a memory 1410 and a processor 1420 coupled to the memory 1410, the processor 1420 configured to, based on instructions stored in the memory 1410, carry out the volume measurement method according to any one of the foregoing embodiments.

Wherein, the memory 1410 may include, for example, system memory, a fixed non-volatile storage medium, or the like. The system memory stores, for example, an operating system, application programs, a boot loader (Boot Loader), and other programs.

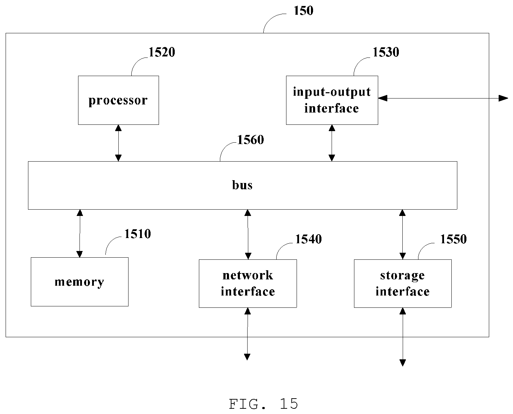

FIG. 15 is a schematic structural diagram of a volume measurement device according to further embodiments of the present disclosure. As shown in FIG. 15, the volume measurement device 150 in this embodiment includes a memory 1510 and a processor 1520, and may further include an input-output interface 1530, a network interface 1540, a storage interface 1550, and the like. These interfaces 1530, 1540, 1550 and the memory 1510 and the processor 1520 may be connected through a bus 1560, for example. The input-output interface 1530 provides a connection interface for input-output devices such as a display, a mouse, a keyboard, and a touch screen. The network interface 1540 provides a connection interface for various networked devices. The storage interface 1550 provides a connection interface for external storage devices such as an SD card and a USB flash disk.

An embodiment of the present disclosure also provides a computer-readable storage medium on which a computer program is stored, which is characterized in that when the program is executed by a processor, any one of the foregoing volume measurement methods is implemented.

One skilled in the art should understand that, the embodiments of this disclosure may be provided as a method, a system, or a computer program product. Therefore, embodiments of this disclosure can take the form of an entirely hardware embodiment, an entirely software embodiment or an embodiment containing both hardware and software elements. Moreover, the present disclosure may take the form of a computer program product embodied on one or more computer-usable non-transitory storage media (including but not limited to disk storage, CD-ROM, optical memory, etc.) having computer-usable program code embodied therein.

The present disclosure has been described with reference to flow charts and/or block diagrams of methods, apparatuses (systems) and computer program products according to embodiments of the present disclosure. It should be understood that each process and/or block in the flowcharts and/or block diagrams, and combinations of the processes and/or blocks in the flowcharts and/or block diagrams may be implemented by computer program instructions. The computer program instructions may be provided to a processor of a general purpose computer, a special purpose computer, an embedded processor, or other programmable data processing device to generate a machine such that the instructions executed by a processor of a computer or other programmable data processing device to generate means implementing the functions specified in one or more flows of the flowcharts and/or one or more blocks of the block diagrams.

The computer program instructions may also be stored in a computer readable memory device capable of directing a computer or other programmable data processing device to operate in a specific manner such that the instructions stored in the computer readable memory device produce an article of manufacture including instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

The above is merely preferred embodiments of this disclosure, and is not limitation to this disclosure. The scope of the invention is defined by the claims.

## Claims

1. A computer implemented volume measurement method, comprising:

   determining thicknesses of a measured object in each of directions of multiple X-rays emitted from an accelerator target according to measurement results of the X-rays (S102, S402), wherein the multiple X-rays are emitted by the accelerator target in a same plane at the same time, and an intersection of the plane and the measured object is a cross section of the measured object;

   determining a proximal distance between the accelerator target and a proximal intersection point on each of the X-rays emitted from the accelerator target, wherein the proximal intersection point is one of the intersection points of the X-ray and the measured object that is closest to the accelerator target (S404);

   determining a cross section area of the measured object according to the thicknesses corresponding to each of the X-rays in the cross section of the measured object (S104), comprising: determining the cross section area of the measured object according to the thicknesses and the proximal distance corresponding to each of the X-rays and the angle between the corresponding adjacent X-rays in the cross section of the measured object (S406); and

   determining a volume of the measured object according to the cross section area (S106, S408) and a length of the measured object in a direction perpendicular to the cross section.

2. The volume measurement method according to claim 1, **characterized in that** the determining a cross section area of the measured object according to the thicknesses corresponding to each of the X-rays in the cross section of the measured object comprises:

   calculating areas of sub-regions divided by the X-rays in the cross section of the measured object according to the thicknesses corresponding to each of the X-rays in the cross section of the measured object (S302); and

   determining the cross section area of the measured object according to the areas of all sub-regions of the cross section (S304).

3. The volume measurement method according to claim 1, **characterized in that** the determining the cross section area of the measured object according to the thicknesses and the proximal distance corresponding to each of the X-rays in the cross section of the measured object comprises:

   determining a first parameter according to proximal distances corresponding to two adjacent X-rays corresponding to each of all sub-regions of the cross section of the measured object (S702); determining a second parameter according to the thicknesses of the measured object in directions of the two adjacent X-rays (S704); calculating an area of a sector ring as an area of the sub-region corresponding to the two adjacent X-rays, with the accelerator target as a center of a circle where the sector ring locates, an angle between the two adjacent X-rays as a central angle of the circle, the first parameter as an inner diameter of the sector ring, and the second parameter as a difference between an outer diameter and the inner diameter of the sector ring (S706); and

determining the cross section area of the measured object according to areas of all sub-regions of the cross section (S708).

4. The volume measurement method according to claim 1, **characterized in that** the determining a proximal distance between the accelerator target and a proximal intersection point on each of the X-rays emitted from the accelerator target comprises:

acquiring first relative position information between a laser scanner and each of one or more points on a measurement surface of the measured object according to a measurement result of the laser scanner (S502);

acquiring second relative position information between the laser scanner and the accelerator target (S504); and

determining a proximal distance between the accelerator target and a proximal intersection point on each of the X-rays according to the first relative position information and the second relative position information (S506).

5. The volume measurement method according to any one of claims 1 to 4, **characterized in that**:

the accelerator target comprises a first accelerator target and a second accelerator target, and the cross section area of the measured object comprises a first area of the cross section and a second area of the cross section;

the first accelerator target is located in a first orientation of the measured object and emits multiple first X-rays, and the first area is determined according to measurement results of the first X-rays in the cross section;

the second accelerator target is located in a second orientation of the measured object and emits multiple second X-rays, and the second area is determined according to measurement results of the second X-rays in the cross section; and

the determining a volume of the measured object according to the cross section area comprises (S106, S408): determining the volume of the measured object according to a maximum value of the first cross section area and the second cross section area (S810).

6. The volume measurement method according to claim 1, **characterized in that** the directions of the X-rays emitted by the accelerator target are perpendicular to a moving direction of the measured object.

7. The volume measurement method according to claim 6, **characterized in that** the determining a volume of the measured object according to the cross section area comprises:

acquiring a moving speed and a time of passing a preset marker of the measured object (S902); and

determining the volume of the measured object according to the moving speed, the time, and the cross section area of the measured object (S904).

8. The volume measurement method according to claim 1, **characterized in that** the cross section area of the measured object comprises areas of multiple cross sections in the measured object; and

the determining a volume of the measured object according to the cross section area comprises:

determining volumes of sub-blocks divided by the multiple cross sections in the measured object according to distances between adjacent cross sections of the multiple cross sections (S1004); and

determining a volume of the measured object according to the volumes of the sub-blocks of the measured object (S1006).

9. The volume measurement method according to claim 1, **characterized by** further comprising:

acquiring a weight of the measured object (S1102);

calculating the density of the measured object according to the weight and the volume of the measured object (S1104); and

determining that the status of the measured object is abnormal in case that a difference between the calculated density of the measured object and a density of the measured object obtained in advance is greater than a preset range (S1106).

10. The volume measurement method according to claim 1, **characterized in that** the measured object is located on a vehicle, and the accelerator target is higher than the lowest plane of the measured object.

11. A volume measurement device, comprising:

a thickness determination module (1201) configured to determine thicknesses of a measured object in each of directions of multiple X-rays emitted from an accelerator target according to measurement results of the X-rays, wherein the multiple X-rays are emitted by the accelerator target in a same plane at the same time, and an intersection of the plane and the measured object is a cross section of the measured object;

a proximal distance determination module (1204) configured to determine a proximal distance between the accelerator target and a proximal intersection point on each of the X-rays emitted from the accelerator target, wherein the proximal intersection point is one of the intersection points of the X-ray and the measured object that is closest to the accelerator target;

a cross section area determination module (1202) configured to determine a cross section area of the measured object according to the thicknesses corresponding to each of the X-rays in the cross section of the measured object, wherein the cross section area determination module (1202) is further configured to determine the cross section area of the measured object according to the thicknesses and the proximal distance corresponding to each of the X-rays and the angle between the corresponding adjacent X-rays in the cross section of the measured object;

a volume determination module (1203) configured to determine a volume of the measured object according to the cross section area and a length of the measured object in a direction perpendicular to the cross section.

**12.** A volume measurement system, **characterized by** comprising:

a volume measurement device (120, 131) according to claim 11; and
an accelerator target (132) configured to emit multiple X-rays toward the measured object to obtain measurement results.

**13.** A computer-readable storage medium, on which a computer program is stored, which when executed by a processor (1420, 1520) implements the volume measurement method according to any one of claims 1 to 10.

**Patentansprüche**

**1.** Ein computerimplementiertes Volumenmessverfahren, umfassend:

Bestimmen von Dicken eines gemessenen Objekts in jeder der Richtungen mehrerer Röntgenstrahlen, die von einem Beschleunigertarget emittiert werden, gemäß den Messergebnissen der Röntgenstrahlen (S102, S402), wobei die mehreren Röntgenstrahlen von dem Beschleunigertarget in einer gleichen Ebene zur gleichen Zeit emittiert werden und ein Schnittpunkt der Ebene und des gemessenen Objekts ein Querschnitt des gemessenen Objekts ist;
Bestimmen eines proximalen Abstands zwischen dem Beschleunigungstarget und einem proximalen Schnittpunkt jedes der von dem Beschleunigertarget emittierten Röntgenstrahlen, wobei der proximale Schnittpunkt einer der Schnittpunkte des Röntgenstrahls und des gemessenen Objekts ist, der dem Beschleunigertarget am nächsten ist (S404);
Bestimmen einer Querschnittsfläche des gemessenen Objekts entsprechend den Dicken, die jedem der Röntgenstrahlen im Querschnitt des gemessenen Objekts entsprechen (S104), umfassend:

Bestimmen der Querschnittsfläche des gemessenen Objekts gemäß den Dicken und dem proximalen Abstand, die jedem der Röntgenstrahlen entsprechen, und dem Winkel zwischen den entsprechenden benachbarten Röntgenstrahlen im Querschnitt des gemessenen Objekts (S406); und
Bestimmen eines Volumens des gemessenen Objekts entsprechend der Querschnittsfläche (S106, S408) und einer Länge des gemessenen Objekts in einer Richtung senkrecht zum Querschnitt.

**2.** Volumenmessverfahren nach Anspruch 1, **dadurch gekennzeichnet, dass** die Bestimmung einer Querschnittsfläche des gemessenen Objekts gemäß den Dicken, die jedem der Röntgenstrahlen im Querschnitt des gemessenen Objekts entsprechen, umfassend:

Berechnen von Flächen von Unterbereichen, die durch die Röntgenstrahlen im Querschnitt des gemessenen Objekts geteilt werden, entsprechend den Dicken, die jeder der Röntgenstrahlen im Querschnitt des gemessenen Objekts entsprechen (S302); und
Bestimmung der Querschnittsfläche des gemessenen Objekts anhand der Flächen aller Teilbereiche des Querschnitts (S304).

**3.** Volumenmessverfahren nach Anspruch 1, **dadurch gekennzeichnet, dass** die Bestimmung der Querschnittsfläche des gemessenen Objekts gemäß den Dicken und dem proximalen Abstand entsprechend jeder der Röntgenstrahlen im Querschnitt des gemessenen Objekts:

Bestimmen eines ersten Parameters anhand der proximalen Abstände, die zwei benachbarten Röntgenstrahlen entsprechen, die jeweils allen Unterbereichen des Querschnitts des gemessenen Objekts entsprechen (S702);

Bestimmung eines zweiten Parameters entsprechend den Dicken des gemessenen Objekts in den Richtungen der beiden benachbarten Röntgenstrahlen (S704);

Berechnen einer Fläche eines Sektorrings als Fläche des Unterbereichs, der den beiden benachbarten Röntgenstrahlen entspricht, wobei das Beschleunigungstarget als Mittelpunkt eines Kreises dient, in dem sich der Sektorring befindet, ein Winkel zwischen den beiden benachbarten Röntgenstrahlen als Zentralwinkel des Kreises, der erste Parameter als Innendurchmesser des Sektorrings und der zweite Parameter als Differenz zwischen einem Außendurchmesser und dem Innendurchmesser des Sektorrings (S706); und

Bestimmung der Querschnittsfläche des gemessenen Objekts anhand der Flächen aller Teilbereiche des Querschnitts (S708); umfasst.

4. Volumenmessverfahren nach Anspruch 1, **dadurch gekennzeichnet, dass** die Bestimmung eines proximalen Abstands zwischen dem Beschleunigungstarget und einem proximalen Schnittpunkt auf jedem der vom Beschleunigungstarget emittierten Röntgenstrahlen:

 Erfassen von ersten relativen Positionsinformationen zwischen einem Laserscanner und jedem von einem oder mehreren Punkten auf einer Messfläche des gemessenen Objekts entsprechend einem Messergebnis des Laserscanners (S502);

 Erfassen einer zweiten relativen Positionsinformation zwischen dem Laserscanner und dem Beschleunigungstarget (S504); und

 Bestimmen eines proximalen Abstands zwischen dem Beschleunigungstarget und einem proximalen Schnittpunkt eines jeden der Röntgenstrahlen gemäß der ersten relativen Positionsinformation und der zweiten relativen Positionsinformation (S506); umfasst.

5. Volumenmessverfahren nach einem der Ansprüche 1 bis 4, **dadurch gekennzeichnet, dass**:

 das Beschleunigungstarget ein erstes Beschleunigungstarget und ein zweites Beschleunigungstarget umfasst, und die Querschnittsfläche des gemessenen Objekts eine erste Fläche des Querschnitts und eine zweite Fläche des Querschnitts umfasst;

 das erste Beschleunigungstarget sich in einer ersten Ausrichtung des Messobjekts befindet und mehrere erste Röntgenstrahlen aussendet, und der erste Bereich anhand der Messergebnisse der ersten Röntgenstrahlen im Querschnitt bestimmt wird;

 das zweite Beschleunigungstarget sich in einer zweiten Ausrichtung des Messobjekts befindet und mehrere zweite Röntgenstrahlen aussendet und der zweite Bereich gemäß den Messergebnissen der zweiten Röntgenstrahlen im Querschnitt bestimmt wird; und

 die Bestimmung eines Volumens des gemessenen Objekts gemäß der Querschnittsfläche (S106, S408): Bestimmen des Volumens des gemessenen Objekts gemäß einem Maximalwert der ersten Querschnittsfläche und der zweiten Querschnittsfläche (S810), umfasst.

6. Volumenmessverfahren nach Anspruch 1, **dadurch gekennzeichnet, dass** die Richtungen der vom Beschleunigungstarget emittierten Röntgenstrahlen senkrecht zu einer Bewegungsrichtung des Messobjekts sind.

7. Volumenmessverfahren nach Anspruch 6, **dadurch gekennzeichnet, dass** die Bestimmung des Volumens des gemessenen Objekts anhand der Querschnittsfläche:

 Erfassen einer Bewegungsgeschwindigkeit und einer Zeit des Passierens einer voreingestellten Markierung des gemessenen Objekts (S902); und

 Bestimmung des Volumens des gemessenen Objekts in Abhängigkeit von der Bewegungsgeschwindigkeit, der Zeit und der Querschnittsfläche des gemessenen Objekts (S904); umfasst.

8. Volumenmessverfahren nach Anspruch 1, **dadurch gekennzeichnet, dass** die Querschnittsfläche des gemessenen Objekts Flächen mehrerer Querschnitte in dem gemessenen Objekt umfasst; und die Bestimmung eines Volumens des gemessenen Objekts gemäß der Querschnittsfläche, umfassend:

 Bestimmen von Volumina von Teilblöcken, die durch die mehreren Querschnitte in dem gemessenen Objekt geteilt sind, entsprechend den Abständen zwischen benachbarten Querschnitten der mehreren Querschnitte (S1004); und

 Bestimmen eines Volumens des gemessenen Objekts entsprechend den Volumina der Teilblöcke des gemessenen Objekts (S1006).

9. Volumenmessverfahren nach Anspruch 1, **dadurch gekennzeichnet, dass** es zusätzlich umfassend:

 Erfassen des Gewichts des gemessenen Objekts (S1102);

Berechnen der Dichte des gemessenen Objekts anhand des Gewichts und des Volumens des gemessenen Objekts (S1104); und

Feststellen, dass der Status des gemessenen Objekts abnormal ist, wenn eine Differenz zwischen der berechneten Dichte des gemessenen Objekts und einer im Voraus erhaltenen Dichte des gemessenen Objekts größer ist als ein voreingestellter Bereich (S1106).

10. Volumenmessverfahren nach Anspruch 1, **dadurch gekennzeichnet, dass** sich das gemessene Objekt in einem Fahrzeug befindet und das Beschleunigertarget höher liegt als die unterste Ebene des gemessenen Objekts.

11. Volumenmessvorrichtung, umfassend:

ein Dickenbestimmungsmodul (1201), das so konfiguriert ist, dass es die Dicken eines gemessenen Objekts in jeder der Richtungen mehrerer Röntgenstrahlen, die von einem Beschleunigertarget emittiert werden, gemäß den Messergebnissen der Röntgenstrahlen bestimmt, wobei die mehreren Röntgenstrahlen von dem Beschleunigertarget in einer gleichen Ebene zur gleichen Zeit emittiert werden und ein Schnittpunkt der Ebene und des gemessenen Objekts ein Querschnitt des gemessenen Objekts ist;

ein Modul (1204) zur Bestimmung des proximalen Abstands, das so konfiguriert ist, dass es einen proximalen Abstand zwischen dem Beschleunigungstarget und einem proximalen Schnittpunkt eines jeden von dem Beschleunigungstarget emittierten Röntgenstrahls bestimmt, wobei der proximale Schnittpunkt einer der Schnittpunkte des Röntgenstrahls und des gemessenen Objekts ist, der dem Beschleunigungstarget am nächsten ist;

ein Querschnittsflächenbestimmungsmodul (1202), das so konfiguriert ist, dass es eine Querschnittsfläche des gemessenen Objekts gemäß den Dicken bestimmt, die jedem der Röntgenstrahlen im Querschnitt des gemessenen Objekts entsprechen, wobei das Querschnittsflächenbestimmungsmodul (1202) ferner so konfiguriert ist, dass es die Querschnittsfläche des gemessenen Objekts gemäß den Dicken und dem proximalen Abstand, der jedem der Röntgenstrahlen entspricht, und dem Winkel zwischen den entsprechenden benachbarten Röntgenstrahlen im Querschnitt des gemessenen Objekts bestimmt;

ein Volumenbestimmungsmodul (1203), das so konfiguriert ist, dass es ein Volumen des gemessenen Objekts in Abhängigkeit von der Querschnittsfläche und einer Länge des gemessenen Objekts in einer Richtung senkrecht zum Querschnitt bestimmt.

12. Ein System zur Volumenmessung, **dadurch gekennzeichnet**, umfassend:

eine Volumenmessvorrichtung (120, 131) nach Anspruch 11; und

ein Beschleunigungstarget (132), das so konfiguriert ist, dass es mehrere Röntgenstrahlen auf das zu messende Objekt aussendet, um Messergebnisse zu erhalten.

13. Computerlesbares Speichermedium, auf dem ein Computerprogramm gespeichert ist, welches bei Ausführung durch einen Prozessor (1420, 1520) das Volumenmessverfahren nach einem der Ansprüche 1 bis 10 implementiert.

**Revendications**

1. Procédé de mesure de volume mis en oeuvre par ordinateur, comprenant :

la détermination des épaisseurs d'un objet mesuré dans chacune des directions de multiples rayons X émis par une cible d'accélérateur en fonction des résultats de mesure des rayons X (S102, S402), dans lequel les multiples rayons X sont émis par la cible d'accélérateur dans un même plan en même temps, et une intersection du plan et de l'objet mesuré est une section transversale de l'objet mesuré ;

la détermination d'une distance proximale entre la cible d'accélérateur et un point d'intersection proximal sur chacun des rayons X émis par la cible d'accélérateur, dans lequel le point d'intersection proximal est l'un des points d'intersection des rayons X et de l'objet mesuré qui est le plus proche de la cible d'accélérateur (S404) ;

la détermination d'une aire de section transversale de l'objet mesuré en fonction des épaisseurs correspondant à chacun des rayons X dans la section transversale de l'objet mesuré (S104), comprenant : la détermination de l'aire de section transversale de l'objet mesuré en fonction des épaisseurs et de la distance proximale correspondant à chacun des rayons X et de l'angle entre les rayons X adjacents correspondants dans la section transversale de l'objet mesuré (S406) ; et

la détermination d'un volume de l'objet mesuré en fonction de l'aire de section transversale (S106, S408) et d'une longueur de l'objet mesuré dans une direction perpendiculaire à la section transversale.

2. Procédé de mesure de volume selon la revendication 1, **caractérisé en ce que** la détermination d'une aire de section transversale de l'objet mesuré en fonction des épaisseurs correspondant à chacun des rayons X dans la section transversale de l'objet mesuré comprend :

   le calcul d'aires de sous-régions divisées par les rayons X dans la section transversale de l'objet mesuré en fonction des épaisseurs correspondant à chacun des rayons X dans la section transversale de l'objet mesuré (S302) ; et la détermination de l'aire de section transversale de l'objet mesuré en fonction des aires de toutes les sous-régions de la section transversale (S304).

3. Procédé de mesure de volume selon la revendication 1, **caractérisé en ce que** la détermination de l'aire de section transversale de l'objet mesuré en fonction des épaisseurs et de la distance proximale correspondant à chacun des rayons X dans la section transversale de l'objet mesuré comprend :

   la détermination d'un premier paramètre en fonction de distances proximales correspondant à deux rayons X adjacents correspondant à chacune de toutes les sous-régions de la section transversale de l'objet mesuré (S702) ; la détermination d'un deuxième paramètre en fonction des épaisseurs de l'objet mesuré dans les directions des deux rayons X adjacents (S704) ; le calcul d'une aire d'un anneau sectoriel en tant qu'aire de la sous-région correspondant aux deux rayons X adjacents, avec la cible d'accélérateur comme centre d'un cercle où se situe l'anneau sectoriel, un angle entre les deux rayons X adjacents comme angle central du cercle, le premier paramètre comme diamètre intérieur de l'anneau sectoriel, et le deuxième paramètre comme différence entre un diamètre externe et le diamètre interne de l'anneau sectoriel (S706) ; et la détermination de l'aire de section transversale de l'objet mesuré en fonction des aires de toutes les sous-régions de la section transversale (S708).

4. Procédé de mesure de volume selon la revendication 1, **caractérisé en ce que** la détermination d'une distance proximale entre la cible d'accélérateur et un point d'intersection proximal sur chacun des rayons X émis par la cible d'accélérateur comprend :

   l'acquisition de premières informations de position relative entre un dispositif de balayage laser et chacun d'un ou de plusieurs points sur une surface de mesure de l'objet mesuré en fonction d'un résultat de mesure du dispositif de balayage laser (S502) ; l'acquisition de deuxièmes informations de position relative entre le dispositif de balayage laser et la cible d'accélérateur (S504) ; et la détermination d'une distance proximale entre la cible d'accélérateur et un point d'intersection proximal sur chacun des rayons X en fonction des premières informations de position relative et des deuxièmes informations de position relative (S506).

5. Procédé de mesure de volume selon l'une quelconque des revendications 1 à 4, **caractérisé en ce que** :

   la cible d'accélérateur comprend une première cible d'accélérateur et une deuxième cible d'accélérateur, et l'aire de section transversale de l'objet mesuré comprend une première aire de la section transversale et une deuxième aire de la section transversale ; la première cible d'accélérateur est située dans une première orientation de l'objet mesuré et émet de multiples premiers rayons X, et la première aire est déterminée en fonction des résultats de mesure des premiers rayons X dans la section transversale ; la deuxième cible d'accélérateur est située dans une deuxième orientation de l'objet mesuré et émet de multiples deuxièmes rayons X, et la deuxième aire est déterminée en fonction des résultats de mesure des deuxièmes rayons X dans la section transversale ; et la détermination d'un volume de l'objet mesuré en fonction de l'aire de section transversale comprend (S106, S408) : la détermination du volume de l'objet mesuré en fonction d'une valeur maximale de la première aire de section transversale et de la deuxième aire de section transversale (S810).

6. Procédé de mesure de volume selon la revendication 1, **caractérisé en ce que** les directions des rayons X émis par la cible d'accélérateur sont perpendiculaires à une direction de déplacement de l'objet mesuré.

7. Procédé de mesure de volume selon la revendication 6, **caractérisé en ce que** la détermination d'un volume de l'objet mesuré en fonction de l'aire de section transversale comprend :

   l'acquisition d'une vitesse de déplacement et d'un temps de passage d'un marqueur prédéfini de l'objet mesuré (S902) ; et la détermination du volume de l'objet mesuré en fonction de la vitesse de déplacement, du temps et de l'aire de section transversale de l'objet mesuré (S904).

8. Procédé de mesure de volume selon la revendication 1, **caractérisé en ce que** l'aire de section transversale de l'objet mesuré comprend des aires de multiples sections transversales dans l'objet mesuré ; et
la détermination d'un volume de l'objet mesuré en fonction de l'aire de section transversale comprend :

   la détermination de volumes de sous-blocs divisés par les multiples sections transversales dans l'objet mesuré en fonction des distances entre les sections transversales adjacentes des multiples sections transversales (S1004) ; et
   la détermination d'un volume de l'objet mesuré en fonction des volumes des sous-blocs de l'objet mesuré (S1006).

9. Procédé de mesure de volume selon la revendication 1, **caractérisé en ce qu'**il comprend en outre :

   l'acquisition d'un poids de l'objet mesuré (S1102) ;
   le calcul de la masse volumique de l'objet mesuré en fonction du poids et du volume de l'objet mesuré (S1104) ; et
   la détermination que l'état de l'objet mesuré est anormal dans le cas où une différence entre la masse volumique calculée de l'objet mesuré et une masse volumique de l'objet mesuré obtenue à l'avance est supérieure à une plage prédéfinie (51106).

10. Procédé de mesure de volume selon la revendication 1, **caractérisé en ce que** l'objet mesuré est situé sur un véhicule, et la cible d'accélérateur est plus haute que le plan le plus bas de l'objet mesuré.

11. Dispositif de mesure de volume, comprenant :

   un module de détermination d'épaisseur (1201) configuré pour déterminer les épaisseurs d'un objet mesuré dans chacune des directions de multiples rayons X émis par une cible d'accélérateur en fonction des résultats de mesure des rayons X, dans lequel les multiples rayons X sont émis par la cible d'accélérateur dans un même plan en même temps, et une intersection du plan et de l'objet mesuré est une section transversale de l'objet mesuré ;
   un module de détermination de distance proximale (1204) configuré pour déterminer une distance proximale entre la cible d'accélérateur et un point d'intersection proximal sur chacun des rayons X émis par la cible d'accélérateur, dans lequel le point d'intersection proximal est l'un des points d'intersection des rayons X et de l'objet mesuré qui est le plus proche de la cible d'accélérateur ;
un module de détermination d'aire de section transversale (1202) configuré pour déterminer une aire de section transversale de l'objet mesuré en fonction des épaisseurs correspondant à chacun des rayons X dans la section transversale de l'objet mesuré, dans lequel le module de détermination d'aire de section transversale (1202) est en outre configuré pour déterminer l'aire de section transversale de l'objet mesuré en fonction des épaisseurs et de la distance proximale correspondant à chacun des rayons X et de l'angle entre les rayons X adjacents correspondants dans la section transversale de l'objet mesuré ;
un module de détermination de volume (1203) configuré pour déterminer un volume de l'objet mesuré en fonction de l'aire de section transversale et d'une longueur de l'objet mesuré dans une direction perpendiculaire à la section transversale.

12. Système de mesure de volume, **caractérisé en ce qu'**il comprend :

   un dispositif de mesure de volume (120, 131) selon la revendication 11 ; et
   une cible d'accélérateur (132) configurée pour émettre de multiples rayons X vers l'objet mesuré afin d'obtenir des résultats de mesure.

13. Support de stockage lisible par ordinateur, sur lequel est stocké un programme informatique qui, lorsqu'il est exécuté par un processeur (1420, 1520), met en oeuvre le procédé de mesure de volume selon l'une quelconque des revendications 1 à 10.

Fig. 1

Fig. 2

Calculate areas of sub-regions divided by the X-rays in the cross section according to the thicknesses corresponding to each of the X-rays — S302

Determine the cross section area of the measured object according to the areas of all sub-regions of the cross section — S304

Fig. 3

Determine thicknesses of a measured object in each of directions of multiple X-rays emitted from an accelerator target according to measurement results of the X-rays — S402

Determine a proximal distance between the accelerator target and a proximal intersection point on each of the X-rays — S404

Determine the cross section area according to the thicknesses and the proximal distance corresponding to each of the X-rays in the cross section — S406

Determine a volume of the measured object according to the cross section area — S408

FIG. 4

Acquire first relative position information between a laser scanner and each of one or more points on a measurement surface of the measured object — S502

Acquire second relative position information between the laser scanner and the accelerator target — S504

Determine a proximal distance between the accelerator target and a proximal intersection point on each of the X-rays — S506

FIG. 5

B

A

FIG. 6

Determine a first parameter according to proximal distances corresponding to two adjacent X-rays corresponding to each of all sub-regions of the cross section — S702

Determine a second parameter according to the thicknesses of the measured object in directions of the two adjacent X-rays — S704

Calculate an area of a sector ring as an area of the sub-region corresponding to the two adjacent X-rays — S706

Determine the cross section area of the measured object according to areas of all sub-regions of the cross section — S708

FIG. 7

Determine thicknesses of the measured object in each of directions of multiple first X-rays emitted from the first accelerator target located in a first orientation — S802

Determine a first area of the cross section according to the thicknesses corresponding to the first X-rays in the cross section — S804

Determine thicknesses of the measured object in each of directions of multiple second X-rays emitted from the second accelerator target located in a second orientation — S806

Determine a second area of the cross section according to the thicknesses corresponding to the second X-rays in the cross section — S808

Determine the volume of the measured object to a maximum value of the first area and the second area of the cross section — S810

FIG. 8A

A1        A2

FIG. 8B

Acquire a moving speed and a time of
passing a preset marker
— S902

Determine the volume of the measured
object according to the moving speed, the
time, and the cross section area of the
measured object
— S904

FIG. 9

Acquire areas of multiple cross sections in the
measured object are acquired
— S1002

Determine volumes of sub-blocks divided by
the cross sections in the measured object
— S1004

Determine a volume of the measured object
according to the volumes of the sub-blocks of
the measured object
— S1006

FIG. 10

Acquire a weight of the measured object — S1102

Calculate the density of the measured object according to the weight and the volume of the measured object — S1104

Determine the status of the measured object as abnormal in case that a difference between the calculated density and a density obtained in advance is greater than a preset range — S1106

FIG. 11

120

thickness determination module 1201

cross section area determination module 1202

proximal distance determination module 1204

volume determination module 1203

abnormality detection module 1205

FIG. 12

130

| speed measuring device 134 | volume measurement device 131 | accelerator target 132 |
|---|---|---|
| timing device 135 | weighing device 136 | laser scanner 133 |

FIG. 13

140

| 1410 |
| memory |
| 1420 |
| processor |

FIG. 14

**150**

**1520**

processor

**1530**

input-output
interface

**1560**

bus

**1510**

memory

**1540**

network
interface

**1550**

storage
interface

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2355071 A
- US 5739426 A1
- EP 2194374 A1